# EUROPEAN PATENT APPLICATION

(11) **EP 2 750 381 A1**
(43) Date of publication of application: **02.07.2014**
(21) Application number: 12827936.1
(22) Date of filing: 23.08.2012
(51) Int. Cl.: H04N 7/173, H04N 5/45

(54) **DISPLAY DEVICE, RECEPTION DEVICE, DISPLAY METHOD, TELEVISION RECEIVER, DISPLAY SYSTEM, PROGRAM AND RECORDING MEDIUM**

(30) Priority: 26.08.2011 JP 2011185145
(71) Applicant: Sharp Kabushiki Kaisha, Osaka-shi, Osaka 545-8522 (JP)
(72) Inventor: ITOH, Norio, Osaka-shi, Osaka 545-8522 (JP)
(74) Representative: Müller-Boré & Partner Patentanwälte PartG mbB
(86) International application number: PCT/JP2012/071368
(87) International publication number: WO 2013/031658

(57) **Abstract**

A television set (10) capable of receiving a video content and an additional content including information associated with the video content includes a demultiplexing unit (12) configured to display the video content on a display unit (16) and the additional content on a tablet terminal (20).

## Description

### Technical Field

The present invention relates to a display apparatus capable of displaying a video content of digital broadcast and an additional content such as a BML content, and a reception apparatus capable of receiving a video content and an additional content. The present invention also relates to a display method in such a display apparatus, and a display system, and the like.

### Background Art

In recent years, digital broadcasting has become popular, and a digital broadcast receiver is now available which is capable of receiving not only broadcast but also Internet services. Furthermore, it has been started to provide various kinds of services in which broadcast and Internet services are mixed. A currently available television receiver capable of receiving such services is configured to display both a broadcast content received via a tuner and a web content received via a communication interface in a display screen area.

In such a situation, various techniques have been proposed to display a plurality of contents on a display apparatus in a manner that allows a user to easily recognize displayed contents.

One example of such a technique is to display contents using a plurality of display apparatuses as disclosed in PTL 1 to PTL 5 described below.

For example, PTL 1 discloses an operation system capable of displaying data produced on windows of a PC such that each piece of data is displayed on one of a plurality of displays corresponding to a window.

PTL 2 discloses a multi-display system configured such that in a situation in which a plurality of application programs are installed in a computer, a user specifies a display to be used in execution in each program, and a window for the program is displayed on the display specified by the user.

PTL 3 discloses a display apparatus for digital broadcast configured such that in a case where an image area of a broadcast image is greater than a maximum allowable display area of a display means, a partial image with an image size corresponding to the maximum allowable display area is extracted from the broadcast image, and the extracted partial image is displayed on the display.

PTL 4 discloses a portable telephone terminal configured such that a television image is reduced to a size corresponding to a screen size of a sub display, and the reduced television image is displayed on the sub display together with a status image selectively indicating status information specified by a user such as remaining battery hours, an antenna status, a clock, or the like.

PTL 5 discloses a digital broadcast receiver configured such that a first display means is connected to a second display means smaller in size than the first display means, and a presentation means is provided to perform processing such that part of electronic program guide data displayed on the first display means is displayed on the second display means.

In digital broadcast, to display a broadcast video image and a web content on a display screen at the same time, two methods described below are widely used: (1) a video image is displayed in a full screen area, and a web content is superimposed thereon such that it is displayed in a part of the screen area; and (2) a video image is reduced and the reduced video image is displayed in a part of a display screen area, and a web content is displayed in the remaining area.

### Citation List

### Patent Literature

PTL 1: Japanese Unexamined Patent Application Publication No. 2008-276433 (laid open November 13, 2008)
PTL 2: Japanese Unexamined Patent Application Publication No. 2008-164988 (laid open July 17, 2008)
PTL 3: Japanese Unexamined Patent Application Publication No. 2007-110750 (laid open April 26, 2007)
PTL 4: Japanese Unexamined Patent Application Publication No. 2007-19628 (laid open January 25, 2007)
PTL 5: Japanese Unexamined Patent Application Publication No. 2003-219301 (laid open July 31, 2003)

### Summary of Invention

### Technical Problem

However, in the technique (1), part of the displayed video image is hidden behind the web content. On the other hand, the technique (2) has a problem that because the video image is reduced, it is not easy to see the displayed video image.

Average web contents are produced assuming that the web contents are displayed on a personal computer (PC), a tablet terminal, or the like and the displayed web contents are viewed by a user from a close distance. On the other hand, broadcast contents watched using a television receiver are produced assuming that the television receiver is watched from a distance 3 times greater than the height of the screen. Therefore, in a case where a user watches a web content on a stationary television receiver placed at a location not very close to the user, it is not easy to recognize characters in the web content.

A method of improving the visibility of web contents is, for example, to perform setting such that character sizes are enlarged according to a user operation. In another method, a content provider prepares both a usual web content and a web content dedicated to television, and a user on a receiving side selects a desirable version to be displayed. However, in the case where the character size is enlarged, a reduction occurs in the number of characters allowed to be displayed in a screen area, and thus part of the content is not displayed. On the other hand, to prepare the web content dedicated to television, the content provider needs a large development cost.

The present invention has been made in view of the various problems described above. A main purpose of the present invention is to provide a display apparatus capable of presenting both a video image received via broadcast and a web content related to the broadcast video image such that a user is allowed to view the both in a suitable manner. Solution to Problem

To solve the above-described problems, the invention provides a display apparatus capable of displaying a video content and an additional content including information related to the video content on a display unit disposed in the display apparatus, comprising a display control means that displays the video content on the display unit, and a transfer means that transfers the additional content to a separately provided display apparatus configured to display the additional content.

Here, the information related to the video content is, for example, information of document data, a layout, a still image, and the like.

Therefore, with the display apparatus according to the present invention, in a case where a user selects as the separately provided display apparatus a tablet terminal or the like that is allowed to be operated by the user from a close distance and allowed to be carried by the user and that is suitable for use in viewing additional contents, the user is allowed to view both the received broadcast video image and the additional content in a suitable manner.

The present invention provides a display method for a display apparatus capable of displaying a video content and an additional content including information related to the video content on a display unit disposed in the display apparatus, including controlling displaying to display the video content on the display unit, and transferring the additional content to a separately provided display apparatus configured to display the additional content.

This display method according to the present invention provides advantageous operational effects similar to those provided by the display apparatus according to the present invention.

Note that the present invention may also provide a television receiver including respective means of the display apparatus described above, and may provide a display system including the display apparatus described above and the separately provided display apparatus described above.

The present invention may also provide a reception apparatus capable of receiving a program content including a video content and an additional content including information related to the video content, the reception apparatus including a transfer means that transfers the additional content in the program content to an external display apparatus.

In a case where a user selects, as the external display apparatus, a display apparatus such as a tablet terminal or the like that is allowed to be operated by the user from a close distance and allowed to be carried by the user and that is suitable for use in viewing additional contents, the user is allowed to watch the additional content in a suitable manner.

To solve the above-described problems, the present invention provides a display system including a reception apparatus capable of receiving a program content including a video content and an additional content including information related to the video content, a first display apparatus that displays the video content in the program content, and a second display apparatus capable of displaying the additional content, wherein the reception apparatus includes a transfer means that transfers the additional content in the program content to the second display apparatus, and wherein the second display apparatus includes a control means that controls each apparatus such that the reception apparatus and the first display apparatus receive the same program content.

In this display system, the video content in the program content is displayed on the first display apparatus, and the additional content in the same program content is displayed on the second display apparatus.

Thus, in the display system according to the present invention, in a case where a user selects as the first display apparatus a display apparatus such as a television receiver or the like that is generally watched by the user from a not very close distance, and the user selects, as the external display apparatus, a display apparatus such as a tablet terminal or the like that is allowed to be operated by the user from a close distance and allowed to be carried by the user and that is suitable for use in viewing additional contents, the user is allowed to view both the received broadcast video image and the additional content in a suitable manner.

The present invention provides a display apparatus capable of displaying a video content and an additional content including information related to the video content on a display unit disposed in the display apparatus, including a display control means that displays the additional content on the display unit, and a transfer means that transfers the video content to a separately provided display apparatus configured to display the video content.

Also with the display apparatus configured in the above-described manner, the user is allowed to view both the received broadcast video image and the additional content in a suitable manner.

A program for causing a computer to operate as the display apparatus or the reception apparatus described above, and a computer-readable storage medium storing such a program also fall into the scope of the present invention. Advantageous Effects of Invention

The display apparatus according to the present invention is capable of displaying a video content and an additional content including information related to the video content on the display unit disposed in the display apparatus, and includes the display control means that displays the video content on the display unit, and the transfer means that transfers the additional content to the separately provided display apparatus configured to display the additional content.

Therefore, with the display apparatus according to the present invention, in a case where a user selects as the separately provided display apparatus a tablet terminal or the like that is allowed to be operated by the user from a close distance and allowed to be carried by the user and that is suitable for use in viewing additional contents, the user is allowed to view both the received broadcast video image and the additional content in a suitable manner. Brief Description of Drawings

[Fig. 1] Fig. 1 is a block diagram illustrating an overview of a communication system according to a first embodiment.
[Fig. 2] In Fig. 2, (a) illustrates a structure of broadcast data, (b) illustrates an example of a PAT syntax, and (c) illustrates a syntax with PID = program_map_PID.
[Fig. 3] Fig. 3 is a diagram illustrating an example of a BML document received by a television set.
[Fig. 4] Fig. 4 is a diagram illustrating an example of a display screen displayed on a television set and a tablet terminal.
[Fig. 5] Fig. 5 is a diagram illustrating an example of a display screen of a tablet terminal.
[Fig. 6] Fig. 6 is a block diagram illustrating an overview of a communication system according to a second embodiment.
[Fig. 7] Fig. 7 is a block diagram illustrating an overview of a communication system according to a second embodiment.
[Fig. 8] Fig. 8 is a diagram illustrating an example of a hierarchical structure of a display screen of a television set.
[Fig. 9] Fig. 9 is a diagram illustrating an example of a PMT syntax.

### Description of Embodiments

### [First Embodiment]

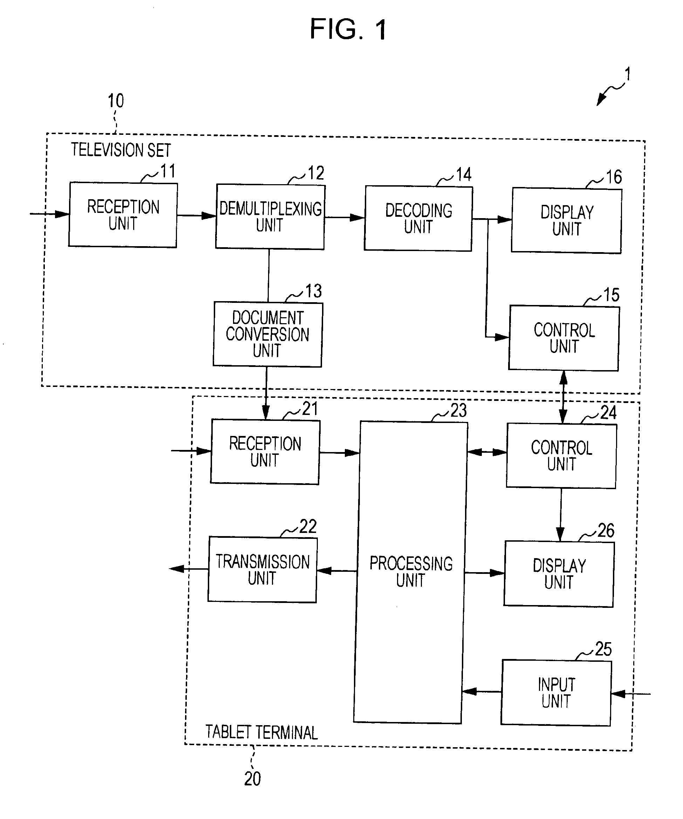

One embodiment (first embodiment) of the present invention is described below with reference to Fig. 1 to Fig. 5. Note that in the following description, various restrictions are assumed to embody the present invention in a preferable manner. However, the technical scope of the present invention is not limited to details of embodiments described below or details described in the figures. In particular, a tablet terminal described below is merely an example of a portable device. That is, the present invention is applicable to various portable devices having a display unit, such as a portable telephone terminal, a smartphone, a PDA (Personal Digital Assistant) device, a portable digital audio player, a digital camera, a television remote control, and the like.

### (Overview of Communication System 1)

Fig. 1 is a block diagram illustrating an overview of a communication system 1 according to the present embodiment. As illustrated in Fig. 1, the communication system 1 includes a television receiver (television set, reception apparatus) 10 according to digital broadcast standard of a particular nation, and a tablet terminal (second display apparatus) 20. The communication system 1 is a system capable of displaying a video content and a document content (additional content) received by the television set 10 such that the video content is displayed on the television set 10 and the document content is displayed on the tablet terminal 20. Here, the document content refers to a content including data related to the video image such as document data, a layout, a still image, and the like. Note that the document content may include information (URL or the like) indicating a location from which it is allowed to get a web content. For example, in digital broadcast in Japan, a BML (Broadcast Markup Language) content corresponds to a document content.

Note that the television set 10 is capable of, depending on a display mode, reproducing and displaying both a video content and a document content on the television set 10 or displaying only the video content on the television set 10 and transferring the document content to a separately provided display apparatus. Hereinafter, the latter mode is assumed in the following description unless otherwise noted.

### (Television Set 10)

The television set 10 is described below. The television set 10 is a display apparatus for use by a user to view a video image from a not very close distance. The television set 10 includes, as illustrated in Fig. 1, a reception unit 11, a demultiplexing unit (display control means, transfer means) 12, a document conversion unit (document transfer means, transfer means) 13, a decoding unit 14 (display control means), a control unit (synchronization control means) 15, and a display unit 16.

The reception unit 11 receives broadcast data including a video content transmitted via broadcast and a document content. The reception unit 11 supplies the received broadcast data to the demultiplexing unit 12.

The demultiplexing unit 12 extracts the video content from the broadcast data supplied from the reception unit 11 to allow it to display the video content on the display unit 16, and supplies the video content to the decoding unit 14. The demultiplexing unit 12 also extracts a particular document content from the broadcast data to allow it to display the document content on the tablet terminal 20 and supplies the document content to the document conversion unit 13. Here, the particular document content refers to a content specified as data to be transmitted to the tablet terminal or all document contents or the like. In a case where the tablet terminal 20 is not connected to the television set 10, the particular document content is not transmitted to the tablet but transmitted to the decoding unit 14. Even when the tablet terminal 20 is connected, a user may be asked in advance whether the particular document content is to be transmitted to the tablet terminal 20. In a case where the user selects that the particular document content is not to be transmitted to the tablet terminal 20, the television set 10 may transmit the particular document content to the decoding unit 14.

The document conversion unit 13 transmits the document content supplied from the demultiplexing unit 12 to the tablet terminal 20 via a communication interface (not illustrated). The document conversion unit 13 performs a conversion process such as a partly rewriting process on information of the document content supplied from the demultiplexing unit 12 and transfers the converted document content to the tablet terminal 20. Details of the document conversion unit 13 will be described later.

The decoding unit 14 decodes the video content or the like that is supplied from the demultiplexing unit 12 and that is to be displayed on the display unit 16, and the decoding unit 14 makes the display unit 16 display a result of the decoding process. Furthermore, the decoding unit 14 notifies the control unit 15 that the video content or the like is to be played.

Upon receiving the notification from the decoding unit 14, the control unit 15 performs control to achieve time synchronization between the video content displayed on display unit 16 and the document content displayed on the tablet terminal 20. More specifically, the control unit 15 acquires time information of the television set 10 and transmits it to tablet terminal 20 via a communication interface (not illustrated in the figure). The control unit 15 then acquires time information of the tablet terminal 20 from the tablet terminal 20, and updates the time information of the television set 10 with the acquired time information. Alternatively, in a case where it is set that the tablet terminal 20 updates the time information thereof based on time information supplied from a predetermined NTP server (time server), the control unit 15 may update the time information of the television set 10 with time information supplied from the same NTP server.

The display unit 16 is a display configured to display a video content.

### (Tablet Terminal 20)

Next, the tablet terminal 20 is described. The tablet terminal 20 is a content display apparatus allowed to be operated by a user at a close location. The tablet terminal 20 includes a reception unit 21, a transmission unit 22, a processing unit 23, a control unit 24, an input unit 25 and a display unit 26.

The reception unit 21 receives a document content transmitted from the television set 10. The reception unit 21 also receives a web content including another document data (for example, an HTML content or the like), a still image, video data transmitted from an external server via a communication network.

The transmission unit 22 transmits information to an external server. For example, the transmission unit 22 transmits request information to a server specified by an URL described in a document content to acquire a web content specified by the URL.

The processing unit 23 totally controls the tablet terminal 20. The processing unit 23 decodes the received document content and displays the decoded document content together with the web content received by the reception unit 21 on the display unit 26. In addition, the processing unit 23 notifies the control unit 24 that the content is to be displayed. Furthermore, for example, the processing unit 23 instructs the control unit 24 to execute a command received by a user via the input unit 25. Note that processes performed by the processing unit 23 are not limited to those described above.

The control unit 24 performs time synchronization with the television set 10 using the time information transmitted from the television set 10. When the control unit 24 receives time information (assumed to be t1) from the processing unit 23, the control unit 24 acquires time information (assumed to be t2) of the tablet terminal 20 and determines whether the transmitted time information is equal to the time information of the tablet terminal 20. In a case where it is determined that there is a difference in time information (that is, in a case where the time information is not equal), the control unit 24 forcefully changes the time of the tablet terminal 20 so as to be equal to the time obtained from the transmitted time information (that is, t2 is updated by t1).

Alternatively, the control unit 24 may receive time information transmitted from an external NTP server (not illustrated in the figure) or the like, and may change the time information of the tablet terminal 20 using the received time information. Note that in the method described above, a discontinuity occurs in the time of the tablet terminal 20. When the discontinuity is large, jumping or skipping may occur in sound/voice or image. To handle such a situation, when the discontinuity is large, the change may be performed stepwisely. For example, in a case where the change is performed in N steps (where N is an arbitrary integer), an amount of change at a time is |t1 - t2|/N.

The input unit 25 accepts a command given by a user and notifies the processing unit 23 of the command.

The display unit 26 is a display that displays the document content received by the reception unit 21 from the television set 10. Note that the display unit 26 is capable of displaying also a web content transmitted from an external HTTP server specified in the document content or specified by a user input or the like.

### (Format of Broadcast Data)

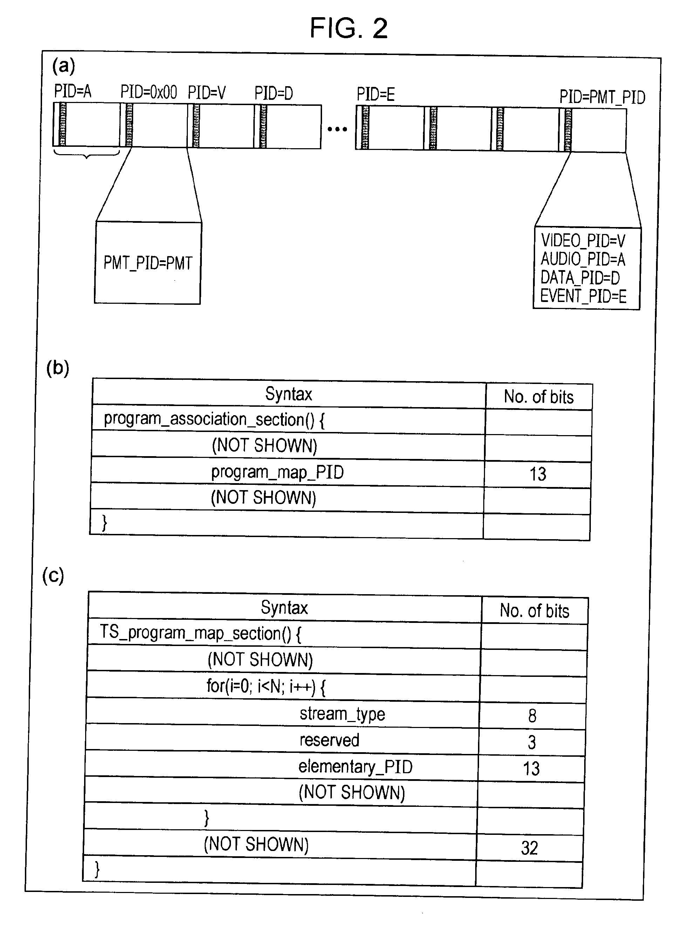

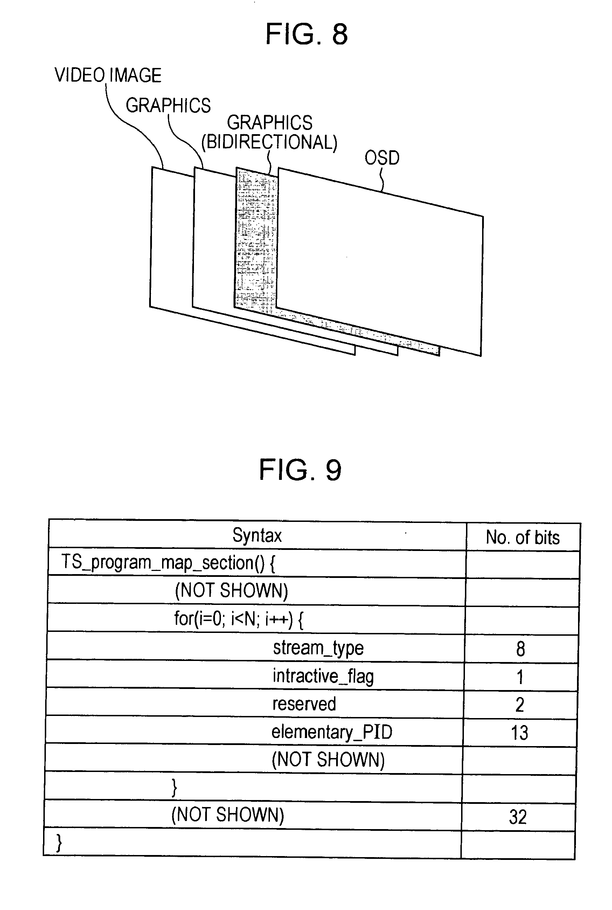

Next, in the present embodiment, a format (data structure) of broadcast data received by the television set 10 is described with reference to Fig. 2 and Fig. 9. In Fig. 2, (a) is a diagram illustrating a format of broadcast data according to the present embodiment. In Fig. 2, (b) is a diagram illustrating an example of a PAT syntax. In Fig. 2, (c) is a diagram illustrating an example of a syntax with PID = program_map_PID. Fig. 9 is a diagram illustrating an example of a PMT syntax.

In Fig. 2, as an example of broadcast data, broadcast data according to the MPEG-2 TS (Transport Stream) standard is illustrated. Note that the format of broadcast data is not limited to that described herein.

As illustrated in (a) of Fig. 2, the broadcast data includes a plurality of TS packets each including 188 bytes. Each TS packet includes a header and a payload. The header includes control information, and the payload includes components such as divided video data, audio data, or the like. The control information of the header includes information such as a packet identifier (PID) or the like indicating what component is contained in the TS packet.

A TS packet with PID = 0 (0x00) is called PAT (Program Association Table) and includes in its payload a 13-bit PID (program_map_PID) of PMT (Program Map Table) as can be seen in the syntax illustrated in (b) of Fig. 2.

A TS packet with PID = program_map_PID includes, as can be seen in the syntax illustrated in (c) of Fig. 2, information such as PID of a component of broadcast data. That is, each PID includes a pair of 8-bit stream_type and 13-bit elementary_PID. For example, in the case of video data, Stream_type is stream_type = 0x01, while for audio data, stream_type is stream_type = 0x03, and so on. In the following description of the present embodiment, for convenience, PID indicating audio data (AUDIO_PID) is denoted by "A", PID indicating video data (VIDEO_PID) is denoted by "V", PID indicating BML data (DATA_PID) is denoted by "D", and PID (EVENT_PID) indicating an event message (for example, EPG or the like) is denoted by "E".

In the present embodiment, PMT of broadcast data includes information indicating that a component of interest is interactive data and is to be transmitted to a tablet terminal. That is, as illustrated in Fig. 9, a one-bit reserved area in the PMT syntax is used as intractive_flag to indicate that when intractive_flag is set to 1, the data includes information referred to to perform bidirectional communication, that is, the data is bidirectional related data.

For example, in the case of BML data which is interactive data, "interactive_flag" is set to 1 to indicate that the component of interest is interactive data. Alternatively, stream_type (meta information) may be set to a value (for example, 0x7F) indicating "INTERACTIVE_DATA". In the present embodiment, in any case, for convenience of illustration, PID of a TS packet including INTERACTIVE_DATA is denoted by "I" as with the case of AUDIO_PID or the like.

In the present embodiment, as described above, broadcast data includes information indicating that the component of interest is interactive data.

### (Demultiplexing Unit 12)

Next, the process performed by the demultiplexing unit 12 is described in detail. When broadcast data such as that illustrated in Fig. 2 is supplied from the reception unit 11, the demultiplexing unit 12 analyzes PAT which is a packet with PID = 0 to acquire PMT_PID. Next, the demultiplexing unit 12 extracts PMT from a packet with PID = PMT_PID. The demultiplexing unit 12 then analyzes the extracted PMT to acquire PID ("A", "V", "D", "E") of each component. Furthermore, a determination is performed in the above-described manner as to whether or not each component is interactive data, and thus "I" is acquired.

Thereafter, in the case where PID of a TS packet is "I", the demultiplexing unit 12 supplies the TS packet to the document conversion unit 13 but otherwise to the decoding unit 14. Note that when PID of a component is "I", there is a possibility that the component includes timing information such as time information of this component (for example, information indicating a play time of the BML data, an event message including time at which a BML script is to be fired, or the like).

As described above, the demultiplexing unit 12 has a function of making a separation between components indicated by PMT as interactive data and components indicated as not interactive data.

### (Document Conversion Unit 13)

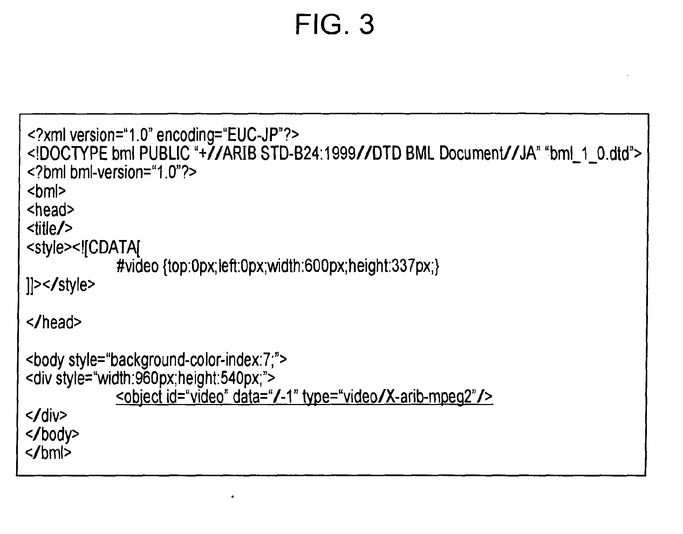

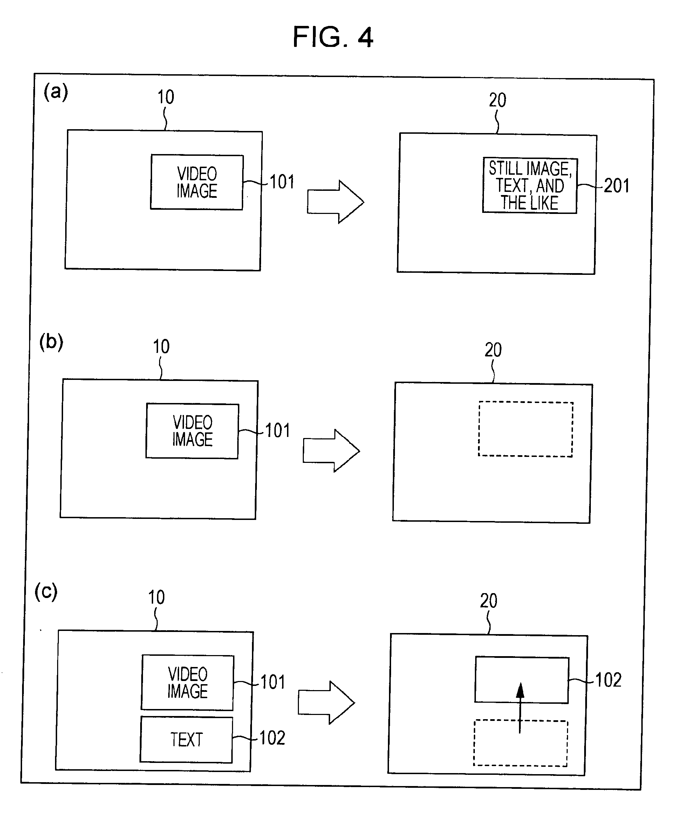

Next, the document conversion unit 13 is described with reference to Fig. 3 and Fig. 4. Fig. 3 is a diagram illustrating an example of a BML document for a case where document data received by the television set 10 is the BML document. Fig. 4 illustrates a screen configuration of the display unit 16. In a case where the television set 10 receives the BML document illustrated in Fig. 3, when the BML content and the video content are displayed on the display unit 16 of the television set 10, they are displayed in such a manner as illustrated on the left-hand side of Fig. 4, while when the BML content is displayed on the display unit 26 of the tablet terminal 20, it is displayed in such a manner as illustrated in a comparative manner on the right-hand side of Fig. 4.

The document conversion unit 13 deletes a part that is not used by the tablet terminal 20 from a BML document such as that illustrated in Fig. 3, and the document conversion unit 13 transmits the resultant document to the tablet terminal 20. In Fig. 3, an underlined part is a character string indicating a video content being currently broadcast. The tablet terminal 20 does not display any broadcast video content, and thus the tablet terminal 20 cannot use such information even if the tablet terminal 20 receives such information. Thus, to prevent the tablet terminal 20 from uselessly receiving and processing information that is not used by tablet terminal 20, the document conversion unit 13 rewrites an object tag including data="/-1" such as an underlined part in Fig. 3 (in the example in Fig. 3, an object tap referred to to display a video image), which is not used by the tablet terminal 20, into a proper form and the document conversion unit 13 transmits the result to the tablet terminal 20. When the television set 10 reads out a description of the underlined part in Fig. 3, the television set 10 displays a video image (video) 101 on the display unit 16 according to the description as illustrated in (a) of Fig. 4, (b) of Fig. 4, or (c) of Fig. 4.

The rewriting of the document conversion unit 13 may be performed, for example, such that an object tag is replaced by data 201 (for example, a still image, text data, or the like) that can be displayed on the tablet terminal 20. In this case, when the tablet terminal 20 plays a BML content received from the television set 10, the BML content is displayed such that data 201 is displayed in an area that is originally specified, by the unconverted BML document, to be used to display a video image 101, as illustrated on the right-hand side of (a) of Fig. 4.

Alternatively, the document conversion unit 13 may simply delete an object tag from a BML document before being subjected to the document conversion. In this case, when the tablet terminal 20 plays a BML content received from the television set 10, the BML content is displayed such that nothing is displayed in an area that is originally specified, by the unconverted BML document, to be used to display the video image 101, as illustrated on the right-hand side of (b) of Fig. 4.

Furthermore, in a case where the television set 10 receives a BML document in which text 102 is displayed below a video image 101 as illustrated on the left-hand side of (c) of Fig. 4, the document conversion unit 13 converts the BML document such that the text 102 is displayed in an area originally specified as an area in which the video image 101 is to be displayed, and nothing is displayed in an area originally specified as an area in which the text 102 is to be displayed. In this case, the BML content is displayed on the display unit 26 of the tablet terminal 20 such that the screen configuration is as illustrated in (c) of Fig. 4.

Note that the document conversion unit 13 may transmit an original BML document such as that illustrated in Fig. 3 directly to the tablet terminal 20.

In the above description of the alternative processing method of the document conversion unit 13, it is assumed by way of example that a BML document is treated. Instead, the document conversion unit 13 may be configured to analyze XSLT (extensible Style Language Transform) and may perform a conversion based on the analysis. In this case, the conversion unit is capable of treating a format other than the BML.

As described above, the document conversion unit 13 converts BML contents to contents capable of being displayed by the tablet terminal 20. As a result, the document conversion unit 13 is allowed to transmit only contents to be displayed by the tablet terminal 20.

Note that communication between the television set 10 and the tablet terminal 20 may be performed using, for example, wireless LAN, Bluetooth (registered trademark), ZigBee (registered trademark), or the like.

### (Processing Unit 23)

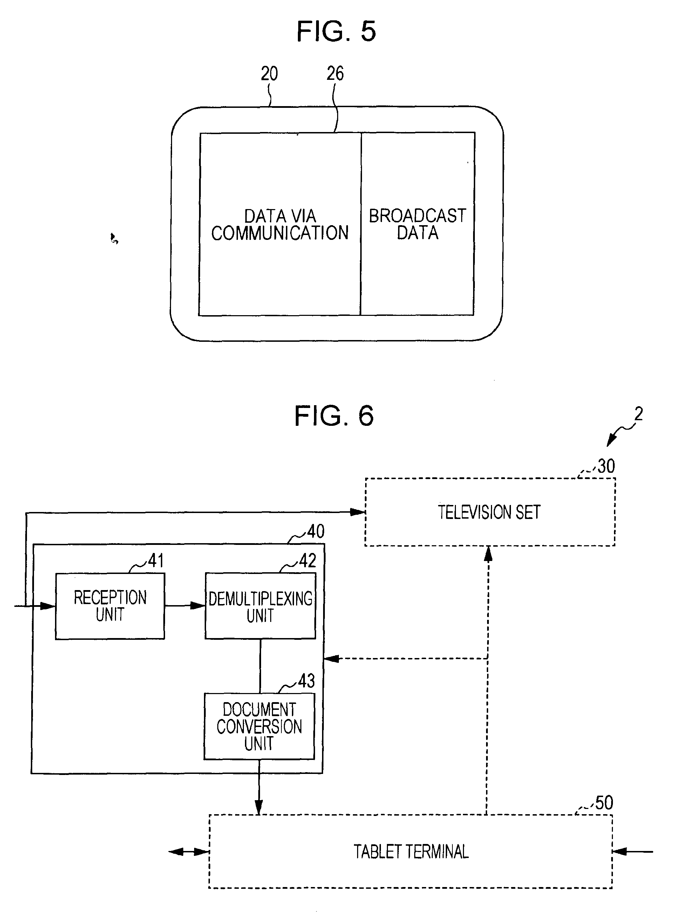

Next, the processing unit 23 is described. The processing unit 23 adjusts a BML content transmitted from the television set 10 so as to have a size capable of being displayed on the display unit 26, and the processing unit 23 displays the resultant BML content on the display unit 26. Furthermore, the processing unit 23 may display the BML content on the display unit 26 such that a web content received by the reception unit 21 via the communication interface is also displayed together with the BML content. As described above, the content received via the communication interface may be a content based on URL described in a BML content or URL directly specified by a user or specified in another HTML document. In this case, the display screen of the tablet terminal 20 may be, for example, such as that illustrated in Fig. 5.

As illustrated in Fig. 5, the tablet terminal 20 displays a BML content (broadcast data) on the right-hand side of the display unit 26 and a web content (data provided via communication) on the left-hand side of the display unit 26. As described above, the tablet terminal 20 is capable of displaying both the BML content and the web content at the same time.

### (Advantageous Features of Television Set 10)

As described above, the television set 10 capable of receiving video contents and document contents displays a video content on the display unit 16 and transfers to the tablet terminal 20 a document content to be displayed on the display unit 26 by the tablet terminal 20. The tablet terminal 20 is a display apparatus that allows web content to be viewed in a suitable manner compared with the television set 10, and thus it is possible to allow a user to view both a video image received via broadcast and a web content in a suitable manner.

Furthermore, because the tablet terminal 20 is capable of accepting an operation performed by a user, the tablet terminal 20 may be used as a remote control.

By performing synchronization between a video content and a BML content, it becomes possible to adjust the timing between the video image displayed on the television set 10 and the BML content displayed on the tablet terminal 20.

In the above example, the description is given for a case where a video content is displayed on the display unit 16 and a document content is transferred to the tablet terminal 20 and displayed thereon. By reading "D" in the above description as "A", the embodiment may be applied to a case where a document content is displayed on the display unit 16 and part of a video content and more particularly an audio data part thereof may be transferred to the tablet terminal 20. Outputting voice/sound from the tablet terminal 20 located close to a user is useful in particular when the user is old and is hard of hearing. In a case where an audio data part and a motion image part of a video content are both transferred, the document conversion unit 13 does not need to perform particular processing, and thus the video content may be directly transferred to the tablet.

### [Second Embodiment]

Another embodiment (second embodiment) of the present invention is described below with reference to Fig. 6. Fig. 6 is a block diagram illustrating a configuration of a communication system 2 according to the present embodiment. As illustrated in Fig. 6, the communication system 2 includes a television receiver (television set) 30, an adapter (reception apparatus) 40, and a tablet terminal (second display apparatus) 50.

The television set 30 is a television receiver of a type widely used, and thus a description thereof is omitted.

The adapter 40 is an apparatus that is connected to the television set 30 to make it possible for the television set 30 to receive broadcast data. As illustrated in Fig. 6, the adapter 40 includes a reception unit 41, a demultiplexing unit 42, and a document conversion unit 43.

The reception unit 41 and the document conversion unit 43 perform processing in a similar manner to the reception unit 11 and the document conversion unit 13, respectively, and thus a description thereof is omitted.

The demultiplexing unit 42 supplies a document content such as a BML content or the like to the document conversion unit 13 supplied from the reception unit 41 such that the document content such as the BML content is displayed on the tablet terminal 50. Note that the demultiplexing unit 42 performs processing in a similar manner to the demultiplexing unit 12 described in the first embodiment except that a video content supplied from the reception unit 41 is discarded.

The tablet terminal 50 is, as with the tablet terminal 20, a content display apparatus allowed to be operated by a user at a close location. The tablet terminal 50 receives a document content such as a BML content transmitted from the adapter 40 and a content (for example, a web content or the like) transmitted from another apparatus such as an external server, and the tablet terminal 50 displays the received contents.

The tablet terminal 50 also includes a channel selection button (a physical button or a button implemented by software). When pressing of this button is detected, a control unit (not illustrated in the figure) of the tablet terminal 50 transmits a channel selection signal to the television set 30 and the adapter 40 via infrared communication or the like. Thus, both the television set 30 and the adapter 40 receive the same broadcast data (program content), and the tablet terminal 50 displays a BML content corresponding to the television set 30. Alternatively, the channel selection signal to the television set 30 may be transmitted not from the tablet terminal 50 but via the adapter 40.

As described above, also in the case where the television set 30 is used which is a television receiver of a widely used type, use of the adapter 40 makes it possible to achieve a cooperation between the television set 30 and the tablet terminal 50, which allows a user to view both a video image received via broadcast and a web content in a suitable manner.

### [Third Embodiment]

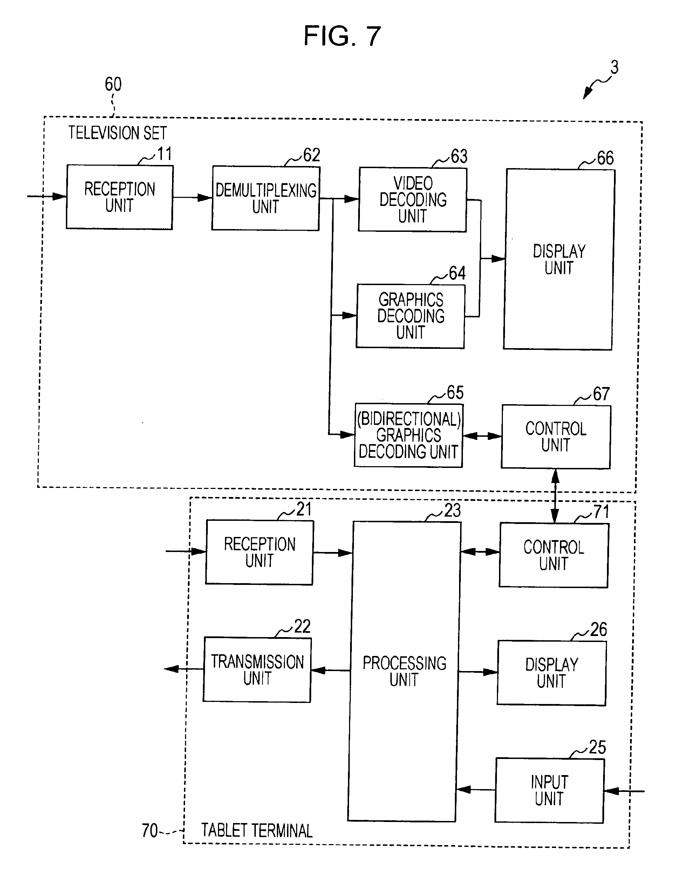

Another embodiment (third embodiment) of the present invention is described below with reference to Fig. 7 and Fig. 8. Fig. 7 is a block diagram illustrating an overview of a communication system 3 according to the present embodiment. Fig. 8 is a diagram illustrating an example of a logical structure of a display screen of a television receiver (television set) 60 according to the present embodiment.

First, referring to Fig. 8, a hierarchical structure of the display screen of the television set 60 is described. The display screen of the television set 60 includes a video image plane for displaying a video image, a graphic image plane for displaying a graphic image, a graphic image (bidirectional) plane for displaying a bidirectional graphic image, and an OSD plane for displaying a screen image (OSD (On Screen Display)) such as an icon when a channel switching or other events occur. The television set 60 is capable of displaying various media in a proper manner by superimposing the planes described above. Note that in the video image plane, not only a video image but other types of image such as a motion image, a still image, or the like may be displayed. In the graphic image plane and the graphic image (bidirectional) plane, not only a graphic image but information such as character information may also be displayed.

### (Communication System 3)

Next, a communication system 3 according to the present embodiment is described. As illustrated in Fig. 7, the communication system 3 includes a television set (display apparatus) 60 and a tablet terminal (separately provided display apparatus) 70.

For convenience of illustration, parts having similar functions to those illustrated in figures associated with the first embodiment or the second embodiment are denoted by similar reference numerals, and a description thereof is omitted.

### (Television Set 60)

The television set 60 is described below. The television set 60 is a display apparatus configured to be viewed by a user from a not very close distance. The television set 60 includes, as illustrated in Fig. 7, a reception unit 11, a demultiplexing unit (display control means) 62, a video decoding unit 63, a graphics decoding unit 64, a graphics (bidirectional) decoding unit 65, a display unit 66, and a control unit 67.

To allow a video content supplied from the reception unit 11 to be displayed on the display unit 66, the demultiplexing unit 62 supplies the video content to the video decoding unit 63 and the graphics decoding unit 64. Furthermore, to allow a graphics content (additional content) supplied from the reception unit 11 to be displayed on the tablet terminal 70, the demultiplexing unit 62 supplies the graphics content to the graphics (bidirectional) decoding unit 65. In a case where the tablet terminal 70 is not connected to the television set 60, the graphics (bidirectional) content is not transmitted to the tablet terminal 70 but transmitted to the graphics decoding unit 64. Even when the tablet terminal 70 is connected, a user may be asked in advance whether the graphics (bidirectional) content is to be transmitted to the tablet terminal 70. In a case where the user selects that the graphics (bidirectional) content is not to be transmitted to the tablet terminal 70, the television set 60 may transmit the graphics (bidirectional) content to the graphics decoding unit 64.

The video decoding unit 63 decodes a video image included in the video content supplied from the demultiplexing unit 62 and produces a video image plane. The video decoding unit 63 supplies the produced video image plane to the display unit 66.

The graphics decoding unit 64 decodes a graphic image included in the video content supplied from the demultiplexing unit 62 and produces a graphic image plane. The graphics decoding unit 64 supplies the produced graphic image plane to the display unit 66.

Note that the video decoding unit 63 may decode not only a video image but also a motion image, a still image, or the like. Furthermore, the graphics decoding unit 64 may decode not only a graphic image but also characters or the like. The graphics decoding unit 64 may produce an OSD plane.

The graphics (bidirectional) decoding unit 65 decodes the graphics content supplied from the demultiplexing unit 62 and supplies the decoded data (drawing data) to the control unit 67. The drawing data includes a bitmap, size information, and the like necessary in producing the graphics (bidirectional) plane.

The display unit 66 displays the video image plane supplied from the video decoding unit 63 and the graphic image plane supplied from the graphics decoding unit 64 in a superimposed manner. Instead of configuring the display unit 66 integrally with the television set 60, the display unit 66 may be configured as a unit (a first display apparatus) separated from the television set 60.

The control unit 67 transmits the drawing data supplied from the graphics (bidirectional) decoding unit 65 to the tablet terminal 70.

### (Tablet Terminal 70)

Next, the tablet terminal 70 is described. The tablet terminal 70 is a content display apparatus allowed to be operated by a user at a close location. The tablet terminal 70 includes a reception unit 21, a transmission unit 22, a processing unit 23, a control unit 71, an input unit 25, and a display unit 26.

The control unit 71 receives the drawing data transmitted from the television set 60 and converts it into a state allowed to be displayed by the display unit 26. That is, the control unit 71 produces, for example, a graphic image (bidirectional) plane. The control unit 71 supplies the produced graphic image (bidirectional) plane to the processing unit 23.

The processing unit 23 displays the graphic image (bidirectional) plane supplied from the control unit 71 on the display unit 26.

As described above, also with the television set 60 configured to display broadcast data on the display unit 66 by using a produced plane, it is possible to allow a user to view both a video image received via broadcasting and a web content in a suitable manner.

### [Notes]

In the first embodiment, a television receiver according to digital broadcast standard such as ARIB is employed as a display apparatus and configured to display a video content on the television receiver and a BML content, which is a document content, on a tablet terminal. However, the present invention is not limited to this embodiment.

For example, a television receiver according to the DVB standard may be employed as a display apparatus. In this case, for example, the display apparatus may be configured such that a video content is displayed on the television receiver, and a document content described in a broadcast description language such as DVB-J, DVB-HTML, or the like is displayed on a tablet terminal.

### [Program and Storage Medium]

Each block of the television set 10, the television set 60, and the adapter 40 may be realized using a hardware logic or using a CPU and software as described below.

That is, the television set 10, the television set 60, and the adapter 40 each include a CPU (central processing unit) that executes a control program to realize each function, a ROM (read only memory) in the program is stored, a RAM (random access memory) in which the program is loaded, and a storage apparatus (storage medium) such as a memory in which the program and various kinds of data are stored. The purpose of the present invention may also be achieved by storing, in a storage medium in a computer-readable manner, software for realizing the above-described functions, i.e., a program code (an executable program, an intermediate code program, a source program) of a control program (authentication program) of the television set 10, the television set 60, and the adapter 40, and supplying the storage medium to the television set 10, the television set 60, and the adapter 40 and reading and executing the program code stored in the storage medium by the computer (or a CPU, MPU, or the like).

Examples usable as the storage medium described above include a tape storage medium such as a magnetic tape, a cassette tape medium, and the like, a magnetic disk storage medium such as a floppy (registered trademark) disk/hard disk and the like, an optical disk storage medium such as CD-ROM/MO/MD/DVD/CD-R and the like, a card storage medium such as an IC card (or a memory card or the like)/optical card and the like, and a semiconductor memory such as mask ROM/EPROM/EEPROM (registered trademark)/flash ROM and the like.

Alternatively, the television set 10, the television set 60, and the adapter 40 may be connected to a communication network, and the program may be supplied via the communication network. There is no particular restriction on the communication network, examples of communication networks include the Internet, an intranet, an extranet, LAN, ISDN, VAN, a CATV communication network, a virtual private network, a telephone network, a mobile communication network, a satellite communication network, and the like. There is no particular restriction on a transmission medium used in the communication network. Examples of transmission media include a wired transmission medium such as an IEEE 1394 transmission medium, a USB transmission medium, a power-line carrier, a cable TV line, a telephone line, an ADSL line, and the like, and a wireless transmission medium such as an IrDA or infrared remote control medium, a Bluetooth (registered trademark) transmission medium, an 802.11 wireless transmission medium, a HDR (high data rate) transmission medium, a portable telephone network, a satellite line, digital terrestrial television network, and the like. Note that the present invention may also be embodied in a form in which the program code described above is provided as a computer data signal embedded in a carrier wave electronically transmitted.

Note that the present invention is not limited to the embodiments described above, but many modifications are possible without departing from the scope of the invention described in claims. Any embodiment achieved by combining technical means disclosed in different embodiments also falls into the technical scope of the present invention.

### [Summary of Invention]

As described above, the display apparatus according to the present invention is capable of displaying a video content and an additional content including information related to the video content on the display unit disposed in the display apparatus, and includes the display control means that displays the video content on the display unit, and the transfer means that transfers the additional content to the separately provided display apparatus configured to display the additional content.

Here, the information related to the video content is, for example, information of document data, a layout, a still image, and the like.

Thus, with the display apparatus according to the present invention, in a case where a user selects as the separately provided display apparatus a tablet terminal or the like that is allowed to be operated by the user from a close distance and allowed to be carried by the user and that is suitable for use in viewing additional contents, the user is allowed to view both the received broadcast video image and the additional content in a suitable manner.

The present invention provides the display method for a display apparatus capable of displaying a video content and an additional content including information related to the video content on a display unit disposed in the display apparatus, the method including controlling displaying to display the video content on the display unit, and transferring the additional content to a separately provided display apparatus configured to display the additional content.

This display method according to the present invention provides advantageous operational effects similar to those provided by the display apparatus according to the present invention.

The display apparatus according to the present invention may be configured to receive a content including at least the video content and the additional content via a broadcast wave, wherein the display apparatus further includes an extraction means that extracts, from the broadcast wave, meta information indicating whether or not the content includes reference information referred to to perform bidirectional communication, and wherein the transfer means makes a determination using the meta information for each content whether or not the content includes the reference information, and the transferring unit transfers only a content determined as including the reference information.

The information related to the video content corresponds to the reference information described above, and thus the present display apparatus displays the additional content including the information related to the video content on the separately provided display apparatus. Thus, when the display apparatus displays the content related to the video content on the separately provided display apparatus, it is possible to allow the user to watch the content related to the video content in a more suitable manner.

The display apparatus according to the present invention may further include a synchronization control means for synchronously displaying the video content on the display unit and an additional content on the separately provided display apparatus, wherein the synchronization control means may synchronize time with the separately provided display apparatus by transmitting time information of the display apparatus including the display unit to the separately provided display apparatus. The separately provided display apparatus may be configured to set time information of the separately provided display apparatus by using time information transmitted from a predetermined time server, the display apparatus may further include a synchronization control means for synchronously displaying the video content on the display unit and an additional content on the separately provided display apparatus, and the synchronization control means may synchronize time with the separately provided display apparatus by using the time information transmitted from the time server.

The display apparatus according to the present invention may further include a document transfer means that, in a case where the additional content includes information for displaying the video content, converts the additional content to a new additional content that does not include the information.

Thus, in a case where a display apparatus incapable of displaying the video content based on the information is selected as the separately provided display apparatus, it is possible to achieve a further advantageous effect that the information is not transferred uselessly to the separately provided display apparatus.

Note that the present invention may also be embodied as a television receiver including means of the display apparatus described above, and may be embodied as a display system including the display apparatus described above and the separately provided display apparatus described above.

The present invention also provides a reception apparatus capable of receiving a program content including a video content and an additional content including information related to the video content, the reception apparatus including a transfer means that transfers the additional content in the program content to an external display apparatus.

In a case where a user selects, as the external display apparatus, a display apparatus such as a tablet terminal or the like that is allowed to be operated by the user from a close distance and allowed to be carried by the user and that is suitable for use in viewing additional contents, it is possible to allow the user to watch the additional content in a suitable manner.

The reception apparatus according to the present invention may further include a document transfer means that, in a case where the additional content includes information for displaying the video content, converts the additional content to a new additional content that does not include the information.

Thus, with this reception apparatus, in a case where a display apparatus incapable of displaying the video content based on the above-described information is selected as the external display apparatus, it is possible to achieve a further advantageous effect that the information is not transferred uselessly to the external display apparatus.

The present invention provides a display system including a reception apparatus capable of receiving a video content and program content including an additional content including information related to the video content, a first display apparatus that displays the video content in the program content; and a second display apparatus capable of displaying the additional content, wherein the reception apparatus includes a transfer means that transfers the additional content in the program content to the second display apparatus, and wherein the second display apparatus includes a control means that controls each apparatus such that the reception apparatus and the first display apparatus receive the same program content.

In this display system, a video content in a program content is displayed on the first display apparatus, and an additional content in the same program content is displayed on the second display apparatus.

Therefore, in the display system according to the present invention, in a case where a user selects as the first display apparatus a display apparatus such as a television receiver or the like that is generally watched by the user from a not very close distance and the user selects as the second display apparatus a tablet terminal or the like that is allowed to be operated by a user from a close distance and that is allowed to be carried by the user to watch an additional content, it is possible to allow the user to watch both the received broadcast video image and the additional content in a suitable manner.

The present invention provides a display apparatus capable of displaying a video content and an additional content including information related to the video content on a display unit disposed in the display apparatus, including a display control means that displays the additional content on the display unit, and a transfer means that transfers the video content to a separately provided display apparatus configured to display the video content.

Also with the display apparatus configured in the above-described manner, a user is allowed to watch both the received broadcast video image and the additional content in a suitable manner.

Note that a program for causing a computer to operate as the display apparatus or the reception apparatus described above, and a computer-readable storage medium storing such a program also fall into the scope of the present invention.

### Industrial Applicability

The present invention may be advantageously applied to a display apparatus such as a television receiver. Reference Signs List

- 1: communication system
- 10: television set (display apparatus)
- 11: reception unit
- 12: demultiplexing unit (display control means, transfer means)
- 13: document conversion unit (document transfer means, transfer means)
- 14: decoding unit (display control means)
- 15: control unit (synchronization control means)
- 16: display unit
- 20: tablet terminal (separately provided display apparatus)
- 21: reception unit
- 22: transmission unit
- 23: processing unit
- 24: control unit
- 25: input unit
- 26: display unit
- 2: communication system
- 30: television set (first display apparatus)
- 40: adapter (reception apparatus)
- 41: reception unit
- 42: demultiplexing unit
- 43: document conversion unit
- 50: tablet terminal (second display apparatus)
- 3: communication system
- 60: television set (display apparatus)
- 62: demultiplexing unit (display control means)
- 63: video decoding unit (display control means)
- 64: graphics decoding unit
- 65: graphics (bidirectional) decoding unit
- 66: display unit
- 67: control unit
- 70: tablet terminal (separately provided display apparatus)
- 71: control unit

## Claims

1. A display apparatus capable of displaying a video content and an additional content including information related to the video content on a display unit disposed in the display apparatus, comprising:
a display control means that displays the video content on the display unit; and
a transfer means that transfers the additional content to a separately provided display apparatus configured to display the additional content.

2. The display apparatus according to claim 1, wherein
the display apparatus is configured to receive a content including at least the video content and the additional content via a broadcast wave,
wherein the display apparatus further includes an extraction means that extracts from the broadcast wave meta information indicating whether or not the content includes reference information referred to to perform bidirectional communication,
and wherein the transfer means makes a determination using the meta information for each content whether or not the content includes the reference information, and the transferring unit transfers only a content determined as including the reference information.

3. The display apparatus according to claim 1 or 2, further comprising a synchronization control means for synchronously displaying the video content on the display unit and an additional content on the separately provided display apparatus,
wherein the synchronization control means synchronizes time with the separately provided display apparatus by transmitting time information of the display apparatus including the display unit to the separately provided display apparatus.

4. The display apparatus according to claim 1 or 2, wherein the separately provided display apparatus is configured to set time information of the separately provided display apparatus by using time information transmitted from a predetermined time server,
wherein the display apparatus further comprises a synchronization control means for synchronously displaying the video content on the display unit and an additional content on the separately provided display apparatus,
and wherein the synchronization control means synchronizes time with the separately provided display apparatus by using the time information transmitted from the time server.

5. The display apparatus according to one of claims 1 to 4, further comprising a document transfer means that, in a case where the additional content includes information for displaying the video content, converts the additional content to a new additional content that does not include the information.

6. A television receiver comprising every means of the display apparatus according to one of claims 1 to 5.

7. A display system comprising the display apparatus according to one of claims 1 to 5 and the separately provided display apparatus.

8. A reception apparatus capable of receiving a program content including a video content and an additional content including information related to the video content, comprising:
a transfer means that transfers the additional content in the program content to an external display apparatus.

9. The reception apparatus according to claim 8, further comprising a document transfer means that, in a case where the additional content includes information for displaying the video content, converts the additional content to a new additional content that does not include the information.

10. A display system comprising:
a reception apparatus capable of receiving a program content including a video content and an additional content including information related to the video content;
a first display apparatus that displays the video content in the program content; and
a second display apparatus capable of displaying the additional content,
wherein the reception apparatus includes a transfer means that transfers the additional content in the program content to the second display apparatus,
and wherein the second display apparatus includes a control means that controls each apparatus such that the reception apparatus and the first display apparatus receive the same program content.

11. A display method for a display apparatus capable of displaying a video content and an additional content including information related to the video content on a display unit disposed in the display apparatus, comprising:
controlling displaying to display the video content on the display unit; and
transferring the additional content to a separately provided display apparatus configured to display the additional content.

12. A display apparatus capable of displaying a video content and an additional content including information related to the video content on a display unit disposed in the display apparatus, comprising:
a display control means that displays the additional content on the display unit; and
a transfer means that transfers the video content to a separately provided display apparatus configured to display the video content.

13. A program for causing a computer to operate as the display apparatus according to one of claims 1 to 5, the program being configured to cause the computer to function as the means provided in the display apparatus.

14. A program for causing a computer to operate as the reception apparatus according to claim 8 or 9, the program being configured to cause the computer to function as the means provided in the reception apparatus.

15. A computer-readable storage medium storing the program according to claim 13 or 14.

16. The display apparatus according to claim 1, further comprising:
a synchronization control means for synchronously displaying the video content on the display unit and the additional content on the separately provided display apparatus; and
a document transfer means that, in a case where the additional content includes information for displaying the video content, converts the additional content to a new additional content that does not include the information,
wherein the synchronization control means synchronizes time with the separately provided display apparatus by transmitting time information of the display apparatus including the display unit to the separately provided display apparatus.
